# EUROPÄISCHE PATENTSCHRIFT

(11) **EP 2 682 826 B1**
(45) Veröffentlichungstag und Bekanntmachung des Hinweises auf die Patenterteilung: **13.06.2018**
(21) Anmeldenummer: 12174583.0
(22) Anmeldetag: 02.07.2012
(51) Int. Cl.: G05B 19/042

(54) **Automatisierungssystem mit Ausgabegerät**
Automation system with output device
Système d'automatisation avec dispositif de sortie

(43) Veröffentlichungstag der Anmeldung: 08.01.2014
(73) Patentinhaber: Siemens Aktiengesellschaft, 80333 München (DE)
(72) Erfinder: Dausend, Stefan, 91126 Schwabach (DE)

(56) Entgegenhaltungen:
- MIRKO FUNKE: "PROFINET Innovations 2010", , 31. Dezember 2010 (2010-12-31), Seiten 1-8, XP002688117, Nuremberg, Germany Gefunden im Internet: URL:http://www.automation.siemens.com/mcms /automation/en/industrial-communications/p rofinet/Documents/articles/_assets/innovat ion/PROFINET_Innovations_EN_F1.pdf [gefunden am 2012-11-27]
- Anonym: "PROFINET Systembeschreibung Technologie und Anwendung", PROFIBUS Nutzerorganisation , 30. Juni 2011 (2011-06-30), Seiten 1-24, XP002688116, Gefunden im Internet: URL:http://www.profibus.com/nc/downloads/d ownloads/profinet-technology-and-applicati on-system-description/display/ [gefunden am 2012-11-27]

## Beschreibung

Die Erfindung betrifft ein Automatisierungssystem, umfassend eine erste Steuerung und eine zweite Steuerung, welche über einen Feldbus mit einem Ausgabegerät verbunden sind. Das Ausgabegerät ist dabei insbesondere ausgestaltet um, beispielsweise in einem Automatisierungssystem, mit einem Feldbus nach dem Profinet-I/O Standard zu arbeiten.

Auf der Seite www.profibus.com findet man eine Systembeschreibung "Profinet Systembeschreibung Technologie und Anwendung".

Derartige Automatisierungssysteme mit Ausgabegeräten werden vorzugsweise in der Prozessautomatisierung eingesetzt um an verteilten Orten in den zu automatisierenden Prozess Daten an Aktoren auszugeben, wobei diese Ausgabedaten durch entsprechende Steuerungen, wie z.B. Automatisierungsgeräte in der Aufbauart einer speicherprogrammierbaren Steuerung, bereitgestellt werden.

In der Automatisierungstechnik müssen bei bestimmten Anwendungen Aktoren von verschiedenen Steuerungen angesteuert werden können. Bisher wurde das Problem durch Einsatz einer Vorortsteuerung gelöst. Hierbei kommunizieren die unterschiedlichen Steuerungen ihre Ausgangsdaten für einen Aktor an die Vorsteuerung. Dort werden die unterschiedlichen Ausgangsdaten der unterschiedlichen Steuerungen ausgewertet und entsprechend einer Steuervorschrift an den Aktor weitergegeben.

Es ist Aufgabe der vorliegenden Erfindung ein Automatisierungssystem mit zumindest einer ersten Steuerung und einer zweiten Steuerung bereitzustellen, bei welchem es möglich ist Aktoren mit einer Mischung aus zwei unterschiedlichen Ausgangsdaten anzusteuern, ohne eine Vorsteuerung zu verwenden.

Gelöst wird die Aufgabe durch ein Automatisierungssystem, umfassend eine erste Steuerung und eine zweite Steuerung, welche über einen Feldbus mit einem Ausgabegerät verbunden sind, wobei das Ausgabegerät ein Modul, welches wiederum mindestens ein erstes Submodul und ein zweites Submodul aufweist, umfasst, wobei die erste Steuerung erste Verschaltungsinformationen aufweist, welche eine Zuordnung zwischen der ersten Steuerung und dem ersten Submodul festlegt, und die zweite Steuerung zweite Verschaltungsinformationen aufweist, welche eine Zuordnung zwischen der zweiten Steuerung und dem zweiten Submodul festlegt, das erste Submodul ist ausgestaltet, erste Ausgangsdaten von der ersten Steuerung entgegenzunehmen, das zweite Submodul ist ausgestaltet zweite Ausgangsdaten von der zweiten Steuerung entgegenzunehmen, weiterhin ist das Modul ausgestaltet, dass es mit einer Mehrzahl von Ausgängen zur Steuerung von Aktoren verbunden ist, wobei das Modul ein Verknüpfungsmittel aufweist, welches ausgestaltet ist, die ersten Ausgangsdaten mit den zweiten Ausgangsdaten logisch zu verknüpfen und dadurch verknüpfte Ausgangsdaten für die Ausgänge zur Steuerung der Aktoren bereitzustellen, das Modul weist ein Diagnosemittel für die verknüpften Ausgangsdaten auf und das Diagnosemittel ist ausgestaltet den Signalzustand eines Ausgangssignals der verknüpften Ausgangsdaten zu bewerten und dem Ausgangssignal einen Status zuzuordnen und den Status an das erste Submodul zurückzukoppeln.

Diese Diagnoseinformationen werden als Zusatzinformationen neben möglichen Ausgangsstatusdaten den Steuerungen mit Vorteil zur Verfügung gestellt. Die Statusinformationen und die Ausgangsstatusdaten und die Diagnoseinformationen werden in den Steuerungen überprüft und es können daraus sicherheitstechnische Maßnahmen abgeleitet werden.

Sind beispielsweise zwei Steuerungen an ein Ausgabegerät angeschlossen spricht man in der Automatisierungstechnik, insbesondere beim Profinet-I/O, von einem Shared Device. Das Ausgabegerät ist demnach ein geteiltes Ausgabegerät, welches für verschiedene Steuerungen Daten, insbesondere Ausgangsdaten, für Aktoren entgegennehmen kann. Bei den Modellierungen nach der Profinet-Norm (IEC 61584/IEC 61784) ist vorgesehen, dass Shared Devices dadurch zusammengestellt werden, dass das Ausgabegerät in Submodule unterteilt ist und diesen Submodulen jeweils eindeutig eine Steuerung, also ein Controller, zugeordnet ist. Eine Softwareapplikation, beispielsweise ein ablauffähiges SPS Programm, dieses Controllers oder dieser Steuerung, kann nur die ihr zugeordneten Submodule mit Ausgangsdaten ansteuern. Da die Hersteller beim Aufbau von Automatisierungsgeräten und Eingabegeräten diese Norm nicht verletzen wollen, aber dennoch eine Möglichkeit bieten wollen, dass mehrere Steuerungen oder Controller bei bestimmten prozesstechnischen Anwendungen einen Aktor, beispielsweise einen Motor, ansteuern können, wurde in das Ausgabegerät mit Vorteil ein Verknüpfungsmittel zur Verknüpfung von ersten und zweiten Ausgangsdaten unterschiedlicher Steuerungen eingearbeitet, so dass nun die unterschiedliche Steuerungen gleichzeitig Ausgangsdaten für einen einzigen Aktor bereitstellen können.

In einer vorteilhaften Ausgestaltung weist das Modul ein Betriebsartenschaltmittel auf, welches mit einem Mittel aufweisend eine Steuersoftware des Moduls in Verbindung steht, und die Steuersoftware ausgestaltet ist, das Betriebsartenschaltmittel abzufragen und zwischen einer Steuerung des Moduls in einem Standardbetrieb oder einem Betrieb, in welchem die ersten und zweiten Ausgangsdaten verknüpft werden, zu wählen. Das Betriebsartenschaltmittel bietet den Vorteil, ein Ausgabegerät in einem Automatisierungssystem flexibel einzusetzen.

Um die Zuordnungen zwischen den Steuerungen und den Submodulen zu vereinfachen, weist das Modul einen Parameterblock auf, in welchem ein Gerätemodell, umfassend das Ausgabegerät, mindestens das erste Modul, welches wiederum mindestens das erste Submodul und das zweite Submodul aufweist, und die erste und die zweite Steuerung mit deren Verschaltungsinformationen, abgespeichert ist.

Die genannte Modellierung des Gerätemodells findet beispielsweise in der genannten Profinet-Norm Anwendung. Hier sind die Gerätetypen Controller und I/O-Device, wobei das I/O-Device dem Ausgabegerät entspricht, spezifiziert. Das Gerätemodell für I/O-Devices besteht demnach aus den Objekten I/O-Device, Modulen und Submodulen. Die Profinet-Spezifikation sieht vor, dass ein Submodul mit seinen Schnittstellen eindeutig einem Controller zugeordnet ist. Mit dem Parameterblock in dem Modul ist das Ausgabegerät nach wie vor nach der Vorgabe der Profinetspezifikation mit der eindeutigen Zuordnung eines Submoduls zu einer Steuerung parametriert, aber das Verknüpfungsmittel erlaubt es nun, die Ausgangsdaten unterschiedlicher Steuerungen zu verknüpfen und neue, verknüpfte Ausgangsdaten für Aktoren bereitzustellen, wodurch die Möglichkeit geschaffen ist einen Aktor von unterschiedlichen Steuerungen zu steuern.

In einer weiteren Ausgestaltung ist das Modul derart erweitert und ausgestaltet den Status der verknüpften Ausgangsdaten an das zweite Submodul weiterzugeben.

Weiterhin ist das Modul dazu ausgestaltet die ersten Ausgangsdaten als erste Ausgangsstatusdaten und die zweiten Ausgangsdaten als zweite Ausgangsstatusdaten an das erste Submodul und an das zweite Submodul zurückzukoppeln.

In einer weiteren Ausgestaltung weist das Eingabegerät einen Rückwandbus auf, in welchen mehrere Module steckbar sind.

Die Zeichnung zeigt ein Ausführungsbeispiel, dabei zeigt die
- FIG 1: ein Automatisierungssystem mit mehreren Steuerungen und einem Ausgabegerät und die
- FIG 2: ein Ausgabegerät mit mehreren Modulen.

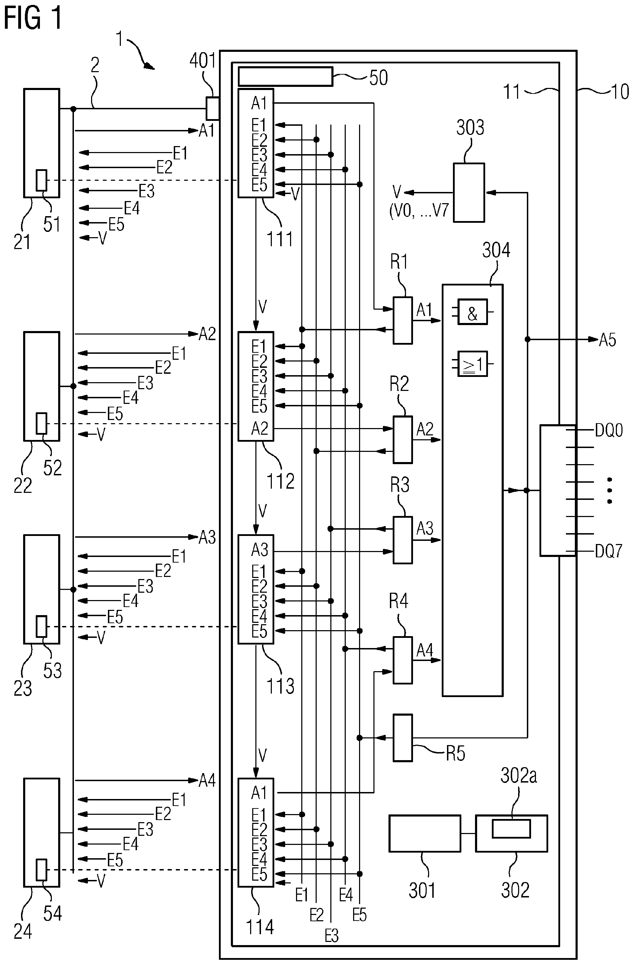

Gemäß der FIG 1 ist ein Automatisierungssystem 1, umfassend eine erste Steuerung 21, eine zweite Steuerung 22, eine dritte Steuerung 23 und eine vierte Steuerung 24, welche gemeinsam auf ein Ausgabegerät 10 über einen Feldbus 2 zugreifen können, gezeigt.

Um die Zugriffe bzw. die Steuerungen zu koordinieren, weist die erste Steuerung 21 erste Verschaltungsinformationen 51 auf, wobei der Zugriff der ersten Steuerung 21 über den Feldbus 2 auf ein erstes Submodul 111 eines Moduls 11 des Ausgabegerätes 10 symbolisch über eine gestrichelte Linie angezeigt ist. Die zweite, dritte, vierte Steuerung 22,23,24 weisen ebenfalls zweite, dritte, vierte Verschaltungsinformationen 52,53,54 auf. Auch diese Zugriffs- oder Steuerwege sind symbolisch über gestrichelte Linien zu dem Ausgabegerät 10 angedeutet. Demnach ist die erste Steuerung 21 dem ersten Submodul 111, die zweite Steuerung 22 einem zweiten Submodul 112, die dritte Steuerung 23 einem dritten Submodul 113 und die vierte Steuerung 24 einem vierten Submodul 114 zugeordnet.

Das Ausgabegerät 10 ist mit einer Mehrzahl von Ausgängen DQ0,...,DQ7 für die Ausgabe von Prozess-Signalen an möglicherweise angeschlossenen Aktoren verbunden.

In dem Ausführungsbeispiel gemäß FIG 1 weist das Ausgabegerät 10 nur ein erstes Modul 11 auf. An das Modul 11 sind über Signalleitungen Aktoren aus einem zu automatisierenden Prozess angeschlossen.

In jeder der Steuerungen 21,...,24 läuft jeweils ein separates Steuerungsprogramm ab. Demnach stellt in der ersten Steuerung 21 ein erstes Steuerprogramm erste Ausgangsdaten A1 bereit, in der zweiten Steuerung 22 stellt ein zweites Steuerprogramm zweite Ausgangsdaten A2 bereit, in der dritten Steuerung 23 stellt ein drittes Steuerprogramm dritte Ausgangsdaten A3 und in der vierten Steuerung 24 stellt ein viertes Steuerprogramm vierte Ausgangsdaten A4 bereit. Die Ausgangsdaten A1,...,A4 werden über den Feldbus 2 über eine Feldbusschnittstelle 401 zu dem Ausgabegerät 10 gesendet. Die ersten Ausgangsdaten A1 sind für das erste Submodul 111, die zweiten Ausgangsdaten A2 sind für das zweite Submodul 112, die dritten Ausgangsdaten A3 sind für das dritte Submodul 113 und die vierten Ausgangsdaten A4 sind für das vierte Submodul 114 bestimmt.

Über interne Signalleitungen in dem Modul 11 werden die Ausgangsdaten A1,...,A4 an ein Verknüpfungsmittel 304 geführt. In dem Verknüpfungsmittel 304 sind gemäß der boolschen Algebra, beispielsweise "UND" und/oder "ODER"-Gatter, implementiert. Die entsprechenden Ausgangsdaten A1,...,A4 werden in dem Verknüpfungsmittel 304 logisch verknüpft und das Verknüpfungsergebnis wird als fünfte Ausgangsdaten A5 einem physikalischen Ausgangstreiber des Ausgabegerätes 10 bereitgestellt und dadurch kann über die Ausgänge DQ0,...,DQ7 jeweils ein Aktor angesteuert werden.

Zwischen den Submodulen 111,...,114 und den Verknüpfungsmittel 304 sind Rückkoppelmittel R1,...,R5 angeordnet. Das erste Rückkopplungsmittel R1 ist ausgestaltet, die ersten Ausgangsdaten A1 des ersten Submoduls 111 entgegenzunehmen und zum Einen an das Verknüpfungsmittel 304 weiterzuleiten und zum Anderen die ersten Ausgangsdaten als erste Ausgangsstatusdaten E1 an das zweite Submodul 112, das dritte Submodul 113 und an das vierte Submodul 114 weiterzuleiten bzw. zurückzukoppeln. Analog zu dem ersten Rückkoppelmittel R1 existieren für die zweiten Ausgangsdaten A2 des zweiten Submoduls 112 ein zweites Rückkoppelmittel R2, für die dritten Ausgangsdaten A3 des dritten Submoduls 113 ein drittes Rückkoppelmittel R3 und für die vierten Ausgangsdaten A4 des vierten Submoduls 114 ein viertes Rückkoppelmittel R4.

Da es für eine sichere Prozessführung von Bedeutung ist einen Ausgangsstatus auch der verknüpften Ausgangsdaten A5 zu wissen, existiert ein fünftes Rückkoppelmittel R5, welches fünfte Ausgangsstatusdaten E5 ebenfalls auf alle Submodule 111,...,114 zurückkoppelt.

Um eine Diagnosemöglichkeit zu verbessern weist das Modul 11 ein Diagnosemittel 303 auf. Das Diagnosemittel 303 ist ausgestaltet den Signalzustand jeweils eines Ausgangssignals der verknüpften Ausgangsdaten A5 zu bewerten und dem Ausgangssignal 10 einen Status V0,...,V7 zuzuordnen und diesen Status V0,...,V7 an das erste Submodul 111 weiterzugeben.

Für den Status V0,...,V7, beispielsweise 8-Bit eines Statusbytes, wird nun allgemein Statusdaten V gesagt. Die Statusdaten V liegen über eine Eingangssignalleitung an dem ersten Submodul 111 an. Das erste Submodul 111 leitet die Statusdaten V an das zweite Submodul 112 weiter, das zweite Submodul 112 leitet die Statusdaten V an das dritte Submodul 113 und das dritte Submodul 113 leitet die Statusdaten V an das vierte Submodul 114 weiter.

Da nun alle Submodule 111,...,114 über alle Ausgangsdaten A1,...,A5, alle Ausgangsstatusdaten E1,...,E5 und alle Statusdaten V verfügen, können die Submodule 111,...,114 auch diese gesammelten Statusdaten über den Feldbus 2 an die entsprechenden Steuerungen 21,...,24 für Auswerte- und Diagnosezwecke weiterleiten.

Um von einen Standardbetrieb in einen Betrieb, bei welchem verknüpfte Ausgangsdaten bereitgestellt werden, zu wechseln weist das Modul eine Betriebsartenschaltmittel 301 auf, welche mit einem Mittel 302 aufweisend eine Steuersoftware 302a in Verbindung steht. Dabei ist die Steuersoftware 302a derart ausgestaltet, dass Betriebsartenschaltmittel 301 abzufragen und zwischen einer Steuerung des Moduls 11 durch die Steuersoftware 302a in einem Standardbetrieb oder in einem Ausgangsdaten-Verknüpfungsbetrieb zu wechseln.

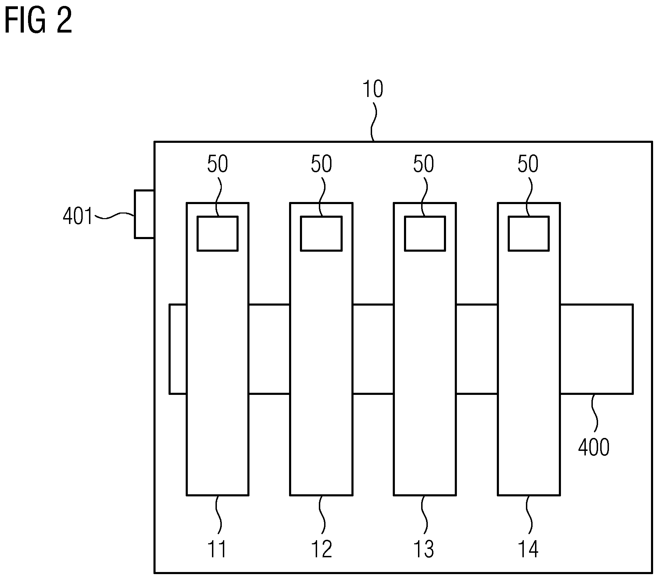

Mit der FIG 2 ist ein erweitertes Ausgabegerät 10 gezeigt. Das Ausgabegerät 10 ist derart erweitert, dass es über einen eingebauten Rückwandbus 400, neben dem ersten Modul l1, ein zweites Modul 12, ein drittes Modul 13 und ein viertes Modul 14 aufnehmen kann. Alle Module11,12,13,14 weisen je einen Parameterblock 50 auf, in welchem die Verschaltungsinformationen zu den unterschiedlichen Steuerungen abgespeichert sind. Der innere Aufbau der Module 11,12,13,14 entspricht dem Aufbau des ersten Moduls 11, welches in FIG 1 gezeigt wurde. Das Ausgabegerät 10 verfügt über einen Feldbusanschluss 401, an welchem der Feldbus 2 angeschlossen wird.

## Patentansprüche

1. Automatisierungssystem (1), umfassend eine
- erste Steuerung (21) und
- eine zweite Steuerung (22),
welche über einen Feldbus (2) mit einem Ausgabegerät (10) verbunden sind, wobei das Ausgabegerät (10) ein
- Modul (11,...,14), welches wiederum
- mindestens ein erstes Submodul (111) und ein zweites Submodul (112) aufweist, umfasst,
wobei die erste Steuerung (21) erste Verschaltungsinformationen (51) aufweist, welche eine Zuordnung zwischen der ersten Steuerung (21) und dem ersten Submodul (111) festlegt, und die zweite Steuerung (22) zweite Verschaltungsinformationen (52) aufweist, welche eine Zuordnung zwischen der zweiten Steuerung (22) und dem zweiten Submodul (112) festlegt,
- das erste Submodul (111) ist ausgestaltet erste Ausgangsdaten (A1) von der ersten Steuerung (21) entgegenzunehmen,
- das zweite Submodul (112) ist ausgestaltet zweite Ausgangsdaten (A2) von der zweiten Steuerung (22) entgegenzunehmen,
weiterhin ist das Modul (11) ausgestaltet, dass es
- mit einer Mehrzahl von Ausgängen (DQ0,...,DQ7) zur Steuerung von Aktoren verbunden ist,
und **dadurch gekennzeichnet, dass** das Modul (11)
- ein Verknüpfungsmittel (304) aufweist, welches ausgestaltet ist, die ersten Ausgangsdaten (A1) mit den zweiten Ausgangsdaten (A2) logisch zu verknüpfen und dadurch verknüpfte Ausgangsdaten (A5) für die Ausgänge (DQ0,...,DQ7) zur Steuerung der Aktoren bereitzustellen,
- und ein Diagnosemittel (303) für die verknüpften Ausgangsdaten (A5) aufweist, wobei das Diagnosemittel (303) ausgestaltet ist den Signalzustand eines Ausgangssignals der verknüpften Ausgangsdaten (A5) zu bewerten und dem Ausgangssignal einen Status (V0,...,V7) zuzuordnen und den Status (V0,...,V7) an das erste Submodul (111) zurückzukoppeln.

2. Automatisierungssystem (1) nach Anspruch 1, wobei das Modul (11) ein Betriebsartenschaltmittel (301) aufweist, welches mit einem Mittel (302) aufweisend eine Steuersoftware (302a) des Moduls (11) in Verbindung steht, und die Steuersoftware (302a) ausgestaltet ist, das Betriebsartenschaltmittel (301) abzufragen und zwischen einer Steuerung des Moduls (11) in einem Standardbetrieb oder einem Betrieb, in welchem die ersten und zweiten Ausgangsdaten (A1,A2) verknüpft werden, zu wählen.

3. Automatisierungssystem (1) nach Anspruch 1 oder 2, wobei das Modul (11) einen Parameterblock (50) aufweist, in welchem ein Gerätemodell, umfassend
- das Ausgabegerät (10),
- mindestens das erstes Modul (11), welches wiederum
- mindestens das erste Submodul (111) und das zweite Submodul (112) aufweist,
und die erste und zweite Steuerung (21,22) mit deren Verschaltungsinformationen (51,52), abgespeichert ist.

4. Automatisierungssystem (1) nach einem der Ansprüche 1 bis 3, wobei das Modul (11) weiterhin dazu ausgestaltet ist den Status (V0,...,V7) der verknüpften Ausgangsdaten (A5) an das zweite Submodul (112) weiterzugeben.

5. Automatisierungssystem (1) nach einem der Ansprüche 1 bis 4, wobei das Modul (11) ausgestaltet ist die ersten Ausgangsdaten (A1) als erste Ausgangsstatusdaten (E1) und die zweiten Ausgangsdaten (A2) als zweite Ausgangsstatusdaten (E2) an das erste Submodul (111) und an das zweite Submodul (112) zurückzukoppeln.

6. Automatisierungssystem (1) nach einem der Ansprüche 3 bis 5, wobei das Gerätemodell nach der Profinet-Spezifikation parametriert ist.

7. Automatisierungssystem (1) nach einem der Ansprüche 1 bis 6, wobei das Ausgabegerät (10) einen Rückwandbus (400) aufweist, in welchen mehrere Module (11,12,13,14) steckbar sind.

## Claims

1. Automation system (1), comprising a
- first controller (21) and
- a second controller (22),
which are connected via a field bus (2) to an output device (10), wherein the output device (10) comprises a
- module (11,...,14), which for its part
- has at least a first submodule (111) and a second submodule (112),
wherein the first controller (21) has first interconnection information (51) which defines an assignment between the first controller (21) and the first submodule (111), and
the second controller (22) has second interconnection (52) information, which defines an assignment between the second controller (22) and the second submodule (112),
- the first submodule (111) is embodied to accept first output data (A1) from the first controller (21),
- the second submodule (112) is embodied to accept second
output data (A2) from the second controller (22), furthermore the module (11) is embodied so that it is
- linked to a plurality of outputs (DQ0,...,DQ7) for control of actuators, and **characterised in that** the module (11)
- has a linkage means (304) which is embodied to logically link the first output data (A1) with the second output data (A2) and through this to provide linked output data (A5) for the outputs (DQ0,...,DQ7) to control the actuators,
- and has a diagnostic means (303) for the linked output data (A5) wherein the diagnostic means (303) is embodied to evaluate the signal state of an output signal of the linked output data (A5) and to assign the output signal a status (V0,...,V7) and to couple back the status (V0,...,V7) to the first submodule (111)

2. Automation system (1) according to claim 1, wherein the module (11) has an operating mode switching means (301) which is connected to a means (302) having control software (302a) of the module (11), and the control software (302a) is embodied to interrogate the operating mode switching means (301) and to choose between a control of the module (11) in a standard operating mode or an operating mode in which the first and the second output data (A1, A2) are linked.

3. Automation system (1) according to claim 1 or 2, wherein the module (11) has a parameter block (50) in which a device model comprising
- the output device (10),
- at least the first module (11), which for its part
- has at least the first submodule (111) and the second submodule (112),
and the first and second controller (21, 22) with their interconnection information (51,52) is stored.

4. Automation system (1) according to one of claims 1 to 3, wherein the module (11) is further configured to pass on the status (V0,...,V7) of the linked output data (A5) to the second submodule (112).

5. Automation system (1) according to one of claims 1 to 4, wherein the module (11) is embodied to couple-back the first output data (A1) as first output status data (E1) and the second output data (A2) as second output status data (E2) to the first submodule (111) and to the second submodule (112).

6. Automation system (1) according to one of claims 3 to 5, wherein the device model is parameterised in accordance with the Profinet specification.

7. Automation system (1) according to one of claims 1 to 6, wherein the output device (10) has a backplane bus (400) into which a number of modules (11, 12, 13, 14) are able to be plugged.

## Revendications

1. Système (1) d'automatisation, comprenant
- une première commande (21) et
- une deuxième commande (22),
qui sont reliées à un appareil (10) de sortie par l'intermédiaire d'un bus (2) sur site, l'appareil (10) de sortie comprenant
- un module (1,..., 14), qui a à son tour comprend
- au moins un premier sous-module (111) et un deuxième sous-module (112),
dans lequel la première commande (21) a des premières informations (51) de câblage, qui fixent une association entre la première commande (21) et le premier sous-module (111), et la deuxième commande (22) a des deuxièmes informations (52) de câblage, qui fixent une association entre la deuxième commande (22) et le deuxième sous-module (112),
- le premier sous-module (111) est conformé pour recevoir des premières données (A1) de sortie de la première commande (21),
- le deuxième sous-module (112) est conformé pour recevoir des deuxièmes données (A2) de sortie de la deuxième commande (22),
le module (11) est conformé, en outre, de manière
- à être relié à une pluralité de sorties (DQ0,..., DQ7) pour commander des actionneurs,
et **caractérisé en ce que** le module (11)
- a un moyen (304) de combinaison conformé pour combiner logiquement les premières données (A1) de sortie aux deuxièmes données (A2) de sortie et mettre ainsi à disposition des sorties (DQ0,..., DQ7) des données (A5) de sortie combinées, afin de commander les actionneurs,
- et a un moyen (303) de diagnostic des données (A5) de sortie combinées, le moyen (303) de diagnostic étant conformé pour évaluer l'état d'un signal de sortie des données (A5) de sortie combinées et associer au signal de sortie un statut (V0,..., V7) et renvoyer le statut (V0,..., V7) au premier sous-module (111).

2. Système (1) d'automatisation suivant la revendication 1, dans lequel le module (11) a un moyen (301) de commutation de type de fonctionnement, qui est en liaison avec un moyen (302) ayant un logiciel (302a) de commande du module (11) et le logiciel (302a) de commande est conformé pour appeler le moyen (301) de commutation de type de fonctionnement et choisir entre une commande du module (11) suivant un fonctionnement standard ou un fonctionnement dans lequel les premières et deuxièmes données (A1, A2) de sortie sont combinées.

3. Système (1) d'automatisation suivant la revendication 1 ou 2, dans lequel le module (11) a un bloc (50) de paramètres, dans lequel est mémorisé un modèle d'appareil comprenant
- l'appareil (10 ) de sortie,
- au moins le premier module (11), qui a à son tour comprend
- au moins le premier sous-module (111) et le deuxième sous-module (112),
et la première et la deuxième commande (21, 22) avec leurs informations (51, 52) de câblage.

4. Système (1) d'automatisation suivant la revendication 1 à 3, dans lequel le module (11) est conformé, en outre, pour acheminer le statut (V0,..., V7) des données (A5) de sortie combinées au deuxième sous-module (112).

5. Système (1) d'automatisation suivant la revendication 1 à 4, dans lequel le module (11) est conformé pour renvoyer, au premier sous-module (111) et au deuxième sous-module (112), les premières données (A1) de sortie, comme premières données (E1) de statut de sortie, et les deuxièmes données (A2) de sortie, comme deuxièmes données (E2) de statut de sortie.

6. Système (1) d'automatisation suivant l'une des revendications 3 à 5, dans lequel le modèle d'appareil est paramétré suivant la spécification Profinet.

7. Système (1) d'automatisation suivant l'une des revendications 1 à 6, dans lequel l'appareil (10 ) de sortie a un bus (400) de paroi arrière, dans lequel plusieurs modules (11, 12, 13, 14) peuvent être enfichés.
